# EUROPÄISCHE PATENTSCHRIFT

(11) **EP 3 105 080 B1**
(45) Veröffentlichungstag und Bekanntmachung des Hinweises auf die Patenterteilung: **07.08.2019**
(21) Anmeldenummer: 15708699.2
(22) Anmeldetag: 27.01.2015
(51) Int. Cl.: B60P 7/08

(54) **VORRICHTUNG FÜR DIE FIXIERUNG VON LADEGUT**
DEVICE FOR SECURING OF CARGO
DISPOSITIF D'ARRIMAGE DE CARGAISON

(30) Priorität: 10.02.2014 AT 500962014
(43) Veröffentlichungstag der Anmeldung: 21.12.2016
(73) Patentinhaber: Schuh, Rainer Karl, 2700 Wiener Neustadt (AT)
(72) Erfinder: Schuh, Rainer Karl, 2700 Wiener Neustadt (AT)
(74) Vertreter: Patentanwälte Barger, Piso & Partner
(86) Internationale Anmeldenummer: PCT/AT2015/050023
(87) Internationale Veröffentlichungsnummer: WO 2015/117174

(56) Entgegenhaltungen:
- DE-A1-102004 009 669
- GB-A- 2 275 296
- US-A1- 2013 081 233

## Beschreibung

Die Erfindung betrifft eine Vorrichtung für die Fixierung von Ladegut im Inneren eines LKW-Aufbaus entsprechend dem Oberbegriff des Anspruches 1 und der US 3,344,749. Auch die DE 299 01 216, die US 2009/0243331, die US 3,605,637 und die DE 199 62 810 zeigen derartige Vorrichtungen.

Die erstgenannte Druckschrift hat die Fixierung von Ladegut z.B. im Inneren eines LKW-Aufbaus, zum Inhalt. Dabei ist vorgesehen, in einer Schiene mit hinterschnittener Nut und einem Nutrand, der periodisch bogenförmige, insbesondere kreisbogenförmige, Erweiterungen aufweist, wodurch in Längsrichtung der Schiene eine Teilung mit konstanter Länge definiert wird, eine Art Schloss mittels zumindest zweier Füße mit verbreitertem Ende verschieblich einzusetzen und mittels eines drehbaren, federbelasteten Sperrstiftes je nach Stellung desselben zu fixieren oder freizugeben. Im Bereich zwischen den beiden Füßen ist ein Montagering für einen Gurt vorgesehen. Derartige Schienen werden wegen ihres ursprünglichen Anwendungsgebietes in der Transportbranche umgangssprachlich: "Airline-Schienen" genannt.

Die gattungsgemäße DE 199 62 810 zeigt eine insbesondere für die Fixierung von Rollcontainern gedachte, ähnliche, aber im Vergleich zum damaligen Stand der Technik wesentlich vereinfachte Befestigungsvorrichtung, bei der der Gurt mittig am Schloss angreift, ebenso bei der DE 299 01 216.

Bei der US 2009/0243331 und der US 3,605,637, die ähnliche Vorrichtungen zeigen, sind die Gurten direkt neben den Handhaben für das Lösen bzw. Fixieren der Schlösser angeordnet.
Bei diesen und ähnlichen Vorrichtungen kann vorgesehen sein, dass Schloss in einer bestimmten Stellung bezüglich der Teilung aus der Schiene abheben zu können, die Verbreiterung der Füße ist dann nicht größer als die Ausnehmungen des Nutrandes. Die Fixierung des Schlosses muss dann in einer solchen Lage desselben in der Schiene erfolgen, dass die Füße nicht mit den Ausnehmungen fluchten.

Ein auch durch die oben erwähnte DE 199 62 810 nicht behebbarer Mangel liegt in der Zeitnot, die allgemein im Speditionswesen herrscht und dazu führt, dass die zuständigen Mitarbeiter die Fixierungen für die Gurte in den waagrechten Schienen möglichst an Stellen anbringen, die für sie gut und rasch zugänglich sind, auch wenn die Fixiervorrichtungen in den Schienen, die über eine entsprechende Teilung verfügen, um jeweils eine oder mehrere solcher Teilungen verschiebbar sind. Dadurch kommt es dazu, dass selbst bei relativ gut gespanntem Gurt, auch dies erfolgt leider nicht immer, durch die Biegsamkeit des Gurtes und die ungünstige, nur quer zur Längsachse des LKW-Aufbaus verlaufende Lage des Gurtes eine wirkliche Fixierung des Ladegutes bzw. der Rollwägen nicht erfolgt. Es wäre notwendig, die Fixierungen für den Gurt in die seitlich freibleibenden Spalten zwischen Bordwand bzw. Schiene einerseits und nächstliegendem Ladegut bzw. Rollwagen andererseits, zu schieben damit zuverlässig Zugkräfte mit einer Komponente in Richtung zur Vorderwand hin, an der die Rollwagen anliegen, auftreten. Aus der GB 2 275 296 ist ein in Längsrichtung symmetrisch ausgebildeter Stopper bekannt, der in einer am Boden eines Gefährtes befindlichen Schiene verschieblich und fixierbar ist. Zusätzlich zu einer federbelasteten Halterung weist er aus Sicherheitsgründen eine Schraubfixierung auf, besitzt aber keine Halterung für einen Gurt.

Aus der DE 10 2004 009 669 ist eine Fixiervorrichtung bekannt, bei der ein Gurt in einer horizontalen, rings um den Laderaum laufenden Schiene liegt und mittels einsetzbarer Zapfen an vorbestimmter Stelle aus der Schiene gefädelt werden kann. Gespannt wird der Gurt durch einen auf die Schiene aufsetzbaren Spanner, der, mitten im Trum liegend, den Gurt, nachdem er um 90° um seine Längsachse tordiert wurde, um eine Wickelrolle wickelt und so strafft, ohne dass ein loses Stück im Raum verbleibt, was aus Sicherheitsgründen angestrebt wird.

Die Erfindung hat das Ziel, die Nachteile aller vorbekannten Vorrichtungen zu vermeiden und eine Fixierung in einer jeweils an den Seitenwänden horizontal befestigten Schiene der eingangs genannten Art, die es ohne zeitlichen oder logistischen Aufwand ermöglicht, einen günstigen, in Draufsicht etwa U-förmigen oder V-förmigen Verlauf des Zurrgurtes zu erreichen.

Erfindungsgemäß werden diese Ziele durch die im kennzeichnenden Teil des Anspruches 1 angegebenen Merkmale erreicht; mit anderen Worten, der Fixierteil mit der Handhabe für das Lösen bzw. Fixieren an der Schiene, das Schloss, ist im Abstand von der Halterung für den Gurt vorgesehen, wobei dieser Abstand zumindest das Dreifache, bevorzugt zumindest das Fünffache und besonders bevorzugt zumindest das Siebenfache der Länge einer Teilung der Schiene beträgt, und wobei der Abstand bevorzugt durch eine Stange überbrückt wird, die im montierten Zustand in der Schiene verläuft, somit nicht über diese hervorsteht.

Auf diese Weise kann die Fixiervorrichtung frei zugänglich sein, und die Halterung für den Gurt befindet sich doch schon tief im Spalt zwischen Bordwand und Ladegut. Daher tritt der Gurt aus diesem Spalt stets zumindest angenähert parallel zur oder zumindest nicht in einem Winkel von über 45° zur Fahrtrichtung bzw. Längsmittelrichtung des Fahrzeuges aus dem Spalt, und jede Spannung in diese Richtung führt zur einer brauchbaren und zuverlässigen Fixierung des Ladegutes bzw. der Rollcontainer, die im Folgenden nicht mehr extra alternativ erwähnt werden.

Zur Verankerung des Gurthalters in der Schiene empfiehlt sich zumindest ein Haltefuß, der mit Ausnehmungen der Schienen zusammenwirkt.

Falls für das Schloss in analoger Weise zumindest ein Schlossfuß vorgesehen wird, ist es im Hinblick auf das Einsetzen der Vorrichtung günstig, wenn zwischen dem Haltefuß und dem Schlossfuß in Längsrichtung ein Versatz bezüglich der Teilung der Ausnehmungen besteht. Bevorzugt ist dabei ein positiver Versatz.

Die Befestigung des Gurts am Gurthalter erfolgt bislang mittels eines etwa in Längsrichtung der Schiene abstehenden Ringes. durch den der Gurt geschlungen wird. Dies ist wegen der Verknüllung des Gurtes nachteilig. Im Einklang mit der Erfindung weist daher der Gurthalter einen im Wesentlichen quer zur Längsrichtung der Schiene verlaufenden Bolzen auf. um den der Gurt geschlungen ist. Alternativ kann der Gurthalter auch einen im Wesentlichen senkrecht auf die Schiene stehenden Zapfen aufweisen, an dem der Gurt seitlich schwenkbar befestigt ist.

Die Erfindung wird im Folgenden an Hand der Zeichnung näher erläutert. Dabei zeigt bzw. zeigen:
die Fig. 1 bis 3 schematische, horizontale Schnitte im Bereich der Vorderwand eines teilweise beladenen LKW-Aufbaus,
die Fig. 4 die Situation der Fig. 3 in schematischer, perspektivischer Ansicht,
die Fig. 5 ein Detail der Fig. 2 bzw. 3,
die Fig. 6 bis 8 eine Ausführungsform der erfindungsgemäßen Vorrichtung, einmal zerlegt (Fig. 6), einmal zusammengebaut vor Einsetzen in eine Schiene (Fig. 7) sowie, einmal in eingesetztem Zustand (Fig. 8),
die Fig. 9 und 10 zwei alternative Befestigungen des Gurts am Gurthalter und
die Fig. 11 bis 13 eine Alternative Ausbildung in Ansichten ähnlich den Figs. 6 bis 8.

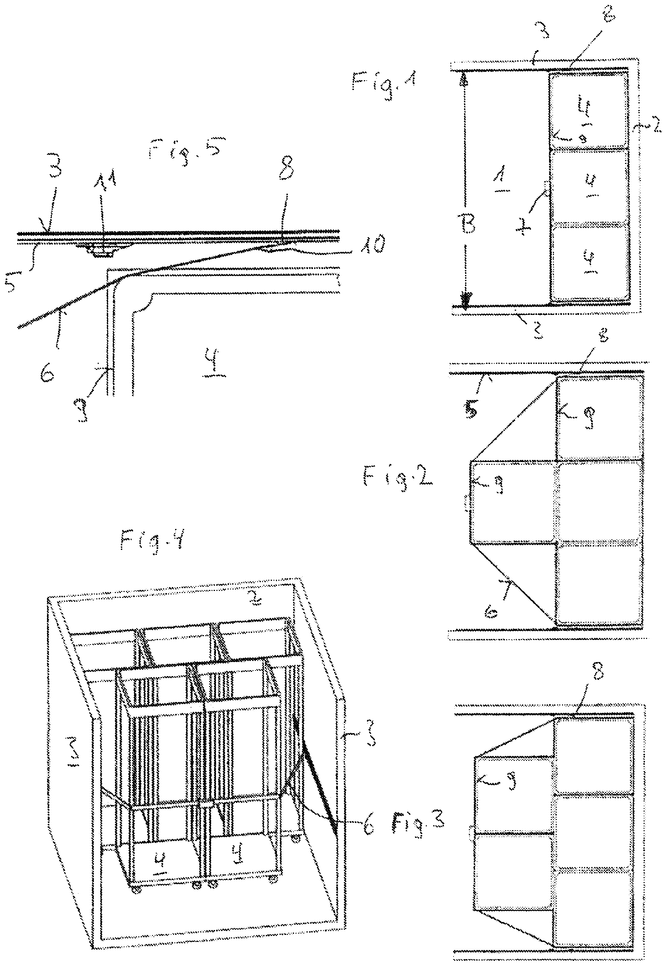

Die Fig. 1 zeigt, in einem rein schematischen, horizontalen Schnitt, den Bereich der Vorderwand 2 eines LKW-Aufbaus 1. samt den anschließenden Seitenwänden 3. Im Inneren des Aufbaus 1 befinden sich drei Rollcontainer 4 die. um die Ladekapazität bestmöglich auszunutzen, im Wesentlichen die ganze freie Breite B des Inneren des Aufbaus ausfüllen. Auf der Innenseite der Seitenwände 3 ist jeweils eine horizontale Schiene 5 fest montiert vorgesehen, (diese ist in den Figs. 1-5 durch die dickere Ausbildung des entsprechenden Striches angedeutet). Fixiert werden die Rollcontainer 4 mittels eines Gurtes 6, der durch einen Straffer 7 gestrafft ist. Die Fig. 1 bis 3 zeigen die Situation so, wie sie anzustreben ist: der Gurt 6 ist an den Schienen 5 an einer Anlenkstelle 8 angehängt, die der Vorderwand 2 näher liegt als die jeweils freien Flächen 9 der Rollcontainer 4. Dies ist insbesondere in Fig. 5 gut ersichtlich.

Wie insbesondere den Fig. 2 und 3 zu entnehmen, erhält der korrekt angebrachte Gurt 6 im Betriebszustand einen annähernd U-förmigen oder V-förmigen Verlauf, je nach Anzahl und Anordnung des zu haltenden Ladegutes bzw. der zu haltenden Rollcontainer. Zur besseren Veranschaulichung zeigt Fig. 4 die Situation der Fig. 3 in perspektivischer Ansicht.

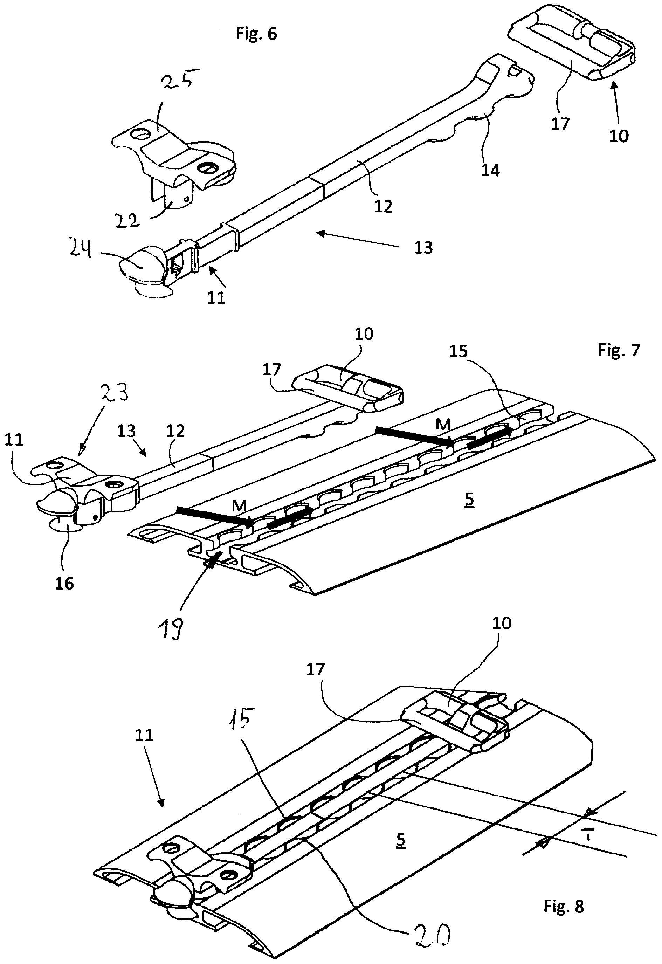

Wie aus den Fig. 1 bis 5 leicht ersichtlich, gibt es gerade in dem Bereich, in dem die Fixiervorrichtung 13 (Fig. 6, 7) in bzw. an der Schiene 5 montiert werden soll, extreme Platznot, die eine Befestigung an der richtigen Anlenkstelle 8 verhindert bzw. erschwert. Selbst wenn eine gewisse Zugänglichkeit besteht, haben die meist unter Zeitnot arbeitenden Auslieferer eine richtiggehende Aversion, die Gurtschlösser an die jeweiligen Anlenkstellen 8 vorzuschieben und dort zu fixieren. Meistens begnügen sie sich vielmehr damit, sie unmittelbar im Bereich der vorderen freien Flächen 9 der Rollcontainer 4 bzw. des umgurteten Ladegutes zu befestigen.

Diese Problematik wird erfindungsgemäß dadurch gelöst (siehe Fig. 5 bis 8 und 11 bis 13), dass bei der erfindungsgemäßen Fixiervorrichtung 13 zwischen einem Gurthalter 10 und einem Schloss 11 für die Befestigung in der Schiene 5 ein Abstand, bevorzugt verwirklicht durch eine Stange 12, deren Querschnitt so ausgebildet ist, dass sie in der Schiene 5 frei liegen und laufen kann, vorgesehen ist. Dies ermöglicht es, wie in Fig. 5 dargestellt, einen beträchtlichen Abstand zwischen dem Schloss 11, das der Benutzer ergreifen und fixieren muss, und dem Gurthalter 10, an dem der Gurt 6 befestigt ist, zu schaffen.

Wie die Fig. 5 zeigt, ist es bei der dargestellten Situation für den Benutzer möglich, vor der freien Fläche 9 des unmittelbar an der Seitenwand 3 stehenden Rollcontainers 4, somit ohne räumliche Beeinträchtigung, das Schloss 11 zu betätigen, ohne dass er im schmalen Spalt zwischen der Schiene 5 und dem Rollcontainer 4 herumfingern müsste, Dabei befindet sich die Anlenkstelle 8 des Gurtes 6 weit jenseits der freien Fläche 9. Zufolge der in Richtung des Gurts 6 wirkenden Kraft ist die Schiene 5 im Bereich der Anlenkstelle 8 keinen untunlichen Beanspruchungen ausgesetzt; diese sind vielmehr deutlich geringer als bei einem nur parallel zur Vorderwand 2 verlaufenden Gurt, bei dem die Schienen 5 normal zu den Seitenwänden 3 auf Ausreißen belastet werden.

Fig. 6 zeigt eine erste Variante einer erfindungsgemäßen Fixiervorrichtung 13 mit demontiertem Gurthalter 10 und demontiertem Schloss 11, sodass die Stange 12, durch die die beiden Teile im Abstand voneinander gehalten werden, deutlich erkennbar ist. Im zusammengesetzten Zustand werden die Teile durch Splinte, Schrauben, Bolzen, etc. mit der aus dem Stand der Technik bekannten Beweglichkeit zueinander und gegebenenfalls mittels Federn in der richtigen Position gehalten. Dies ist in Kenntnis der Erfindung für den Fachmann leicht ersichtlich und anwendbar.

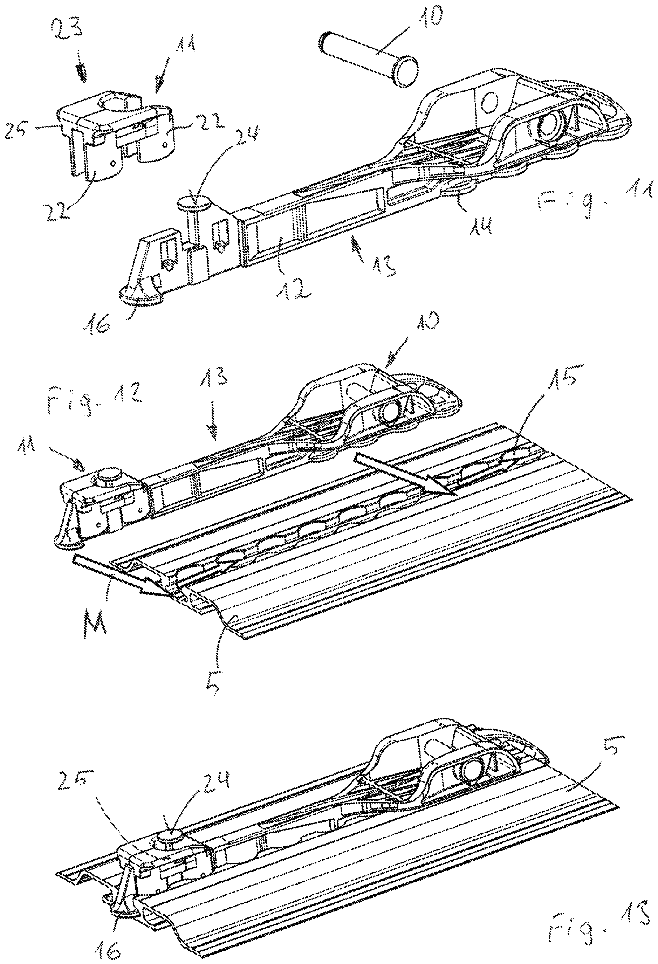

Die Fig. 7 und 8 zeigen die Schiene 5 einmal mit abgehobener und einmal mit eingesetzter Fixiervorrichtung 13. Der Pfeil M gibt die Richtung an, in der die Fixiervorrichtung 13 in die Schiene 5 "eingefädelt" werden kann, dieses Einfädeln erfolgt schräg von oben, die Lage des Pfeils muss räumlich gesehen werden, wenn die Schiene auf einer waagrechten Fläche liegt, wie in den Fig. 7, 8; 12, 13 dargestellt. Die Abmessungen des Querschnittes der Stange 12 in den Ebenen normal zu ihrer Längserstreckung sind so gewählt, dass die Stange 12 in die Schiene 5, wie in Fig. 8 bzw 13 ersichtlich, passt und in Richtung des Pfeiles L, parallel zur Längsachse der Schiene, in dieser verschieblich ist, wenn die Fixierung gelöst ist. Dabei kann die Stange 12 entweder innerhalb des Umrisses der Schiene liegen, wie in Fig. 8, oder aus ihr heraus ragen, wie in Fig. 13.

Die Schiene 5 weist auf bekannte Weise bezüglich des Umrisses der Ränder 20 der Nut 19 eine periodisch wiederkehrende weitere (Ausnehmungen 15) bzw engere Ausbildung auf, dies definiert auf übliche Weise eine Teilung T (Fig. 8) konstanter Länge.

Die Haltevorrichtung 13 weist auf ebenfalls bekannte Weise mindestens einen Haltefuß 14 im Bereich des Gurthalters 10 auf, üblicherweise sind es zumindest zwei, bevorzugt drei derartige Haltefüße 14, die untereinander einen Abstand aufweisen, der dem der Teilung T entspricht. Die Füße sind an ihrem freien Ende verdickt, sodass sie nur dann lotrecht (normal) aus der Schiene entnommen werden können, wenn ihre Längsposition (Position in Richtung der Schienenachse) mit den weiteren Bereichen (Ausnehmungen 15) der Schiene 5 übereinstimmt.

Auch im Bereich des Schlosses 11 der Haltevorrichtung 13 ist auf bekannte Weise wenigstens ein Schlossfuß 16, bevorzugt sind zumindest zwei, vorgesehen und analog ausgebildet. Vorzugsweise ist zwischen den Haltefüßen 14 und dem zumindest einen Schlossfuß 16 in Längsrichtung ein kleiner Versatz - wenige Millimeter, Bruchteile der Teilung T. genügen - bezüglich der Teilung der Ausnehmungen 15 vorgesehen, um ein sukzessives Einfädeln der Fixiervorrichtung 13 (in Richtung des Pfeiles M) in die Schiene 5 zu erleichtern. Beim schrägen Einlegen der Stange 12 mit den Haltefüßen 14 voran ist deren Halt in der Schiene 5 bereits gesichert, wenn der Schlossfuß 16 eingefädelt wird.

Vorzugsweise ist der Versatz positiv, dh der Abstand zwischen den Haltefüßen 14 und dem Schlossfuß 16 ist größer als der Abstand der zugeordneten Ausnehmungen 15. Dies ermöglicht ein besonders einfaches und gleitendes Montieren ohne Bewegungsumkehr.

Die Fixierung der Haltevorrichtung 13 in der Schiene 5 erfolgt auf an sich bekannte Weise durch zumindest einen Fixierbolzen 22, der mittels einer Handhabe 21 betätigt werden kann. Dabei wird der zumindest eine Fixierbolzen 21, der in eine Ausnehmung 15 der Schiene passt, aber nicht in der Schiene verschieblich ist, durch eine Feder in der Fixierposition gehalten und kann mittels der Handhabe entriegelt werden. Die Lage des Fixierbolzens in Längsrichtung bezüglich der Haltefüße ist so gewählt. dass diese in der Fixierposition möglichst um eine halbe Teilung bezüglich ihrer Entnahmeposition verschoben sind, sodass die größte Überdeckung, mit der hinterschnittenen Nut 19 und damit die größte Haltekraft gegeben ist.

Erfindungsgemäß besteht nun zwischen den Haltefüßen 14 und den Schlossfüßen 16, ein Abstand, der zumindest das Dreifache, bevorzugt zumindest das Fünffache und besonders bevorzugt zumindest das Siebenfache der Länge der Teilung T entspricht. Dabei wird der Abstand zwischen den einander zunächst liegenden Haltefüßen 14 und Schlossfüßen 16 herangezogen, da dieser die Tiefe bestimmt. in die der Gurthalter 10 in den Schlitz zwischen Container und Seitenwand geschoben wird.

Alternativ kann gesagt werden, dass der Abstand zwischen dem Gurthalter 10 und der Handhabe 21 die genannten Abmessungen aufweist, und in absoluter Größe kann gesagt werden, dass dieser Abstand zumindest 10 cm, bevorzugt zumindest 15 cm und besonders bevorzugt zumindest 20 cm beträgt. Dabei kann die Messung auf der Seite des Schlosses auf die Achse des Fixierbolzens 22, wenn einer vorhanden ist (Fig. 6), sonst auf das geometrische Mittel der Achsen der Fixierbolzen (Fig. 11) abgestellt werden. Auf der Seite des Gurthalters 10 kann die Messung auf die Stelle bezogen werden, wo die Gurtkraft auf einen Teil übertragen wird, der fest (oder einstückig) mit der Stange 12 verbunden ist.

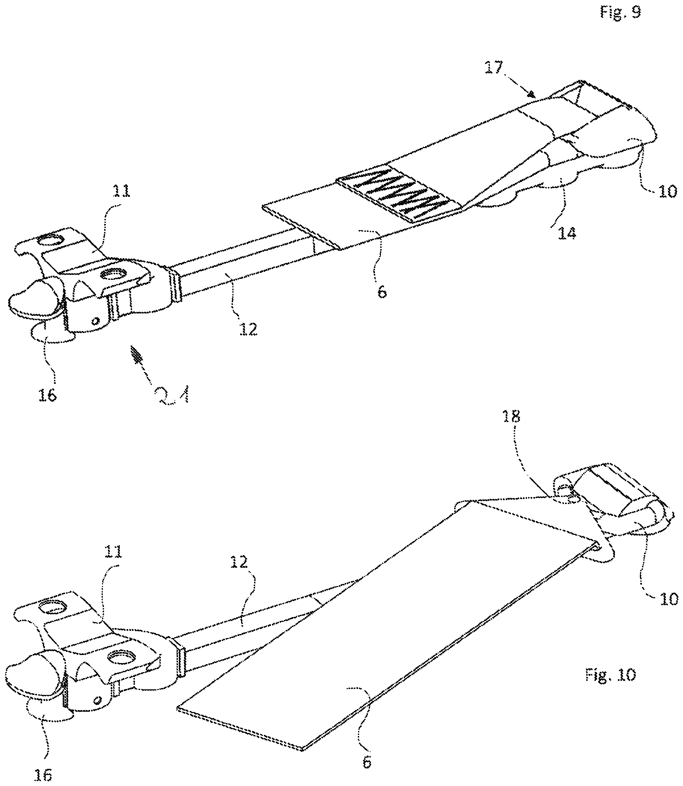

In den Fig. 9 und 10 sind zwei Alternativen der Befestigung des Gurtes 6 am Gurthalter 10 veranschaulicht. Gemäß Fig. 9 ist der Gurt 6 um einen Bolzen 17 (siehe Fig. 6 bis 8, dessen Achse wäre der eine Messpunkt für die Entfernung) geschlungen, gemäß Fig. 10 ist er an einem Zapfen 18 (dessen Achse wäre der eine Messpunkt für die Entfernung seitlich schwenkbar angelenkt. In beiden Fällen ist somit gewährleistet, dass der Gurt 6 im Befestigungsbereich nicht zerknüllt wird.

Die Figs 11 bis 13 zeigen eine Alternative Haltevorrichtung 13 in Ansichten entsprechend denen der Figs. 6 bis 8. Dabei sind vier Haltefüße 14 vorgesehen und zwei Fixierbolzen 22, die Ausführung der Schiene ist massiver als bei der ersten Variante, sie ragt aus der Schiene heraus, ist aber ohne weiteres "in ihr" verschieblich, wenn die Fixierbolzen entriegelt sind. Als Bezugspunkt für die Messung des Abstandes auf die alternative Weise ist die Achse des Bolzens 10 einerseits und die Mitte zwischen den Achsen der beiden Fixierbolzen 22 heranzuziehen. Wie direkt ersichtlich ist, ist der Unterschied zum Abstand zwischen der Achse des in der Darstellung an der Linkesten Position befindlichen Haltefußes und der Achse des Schlossfußes 16 nicht von Bedeutung im Vergleich zum Abstand an sich.

Die Figs. 6 bzw. 11 zeigen auch eine bevorzugte Betätigung 23 für das Schloss 11: Der bzw. die Fixierzapfen 22 sind gegen die Kraft einer nicht dargestellten Feder aus den Ausnehmungen 15 der Schiene 5 heraus bewegbar. worauf die Haltevorrichtung 13 in der Schiene 5 verschieblich ist. Dabei dient eine fest mit der Haltevorrichtung 13 verbundene Auflage 24 als Rast für den Daumen des Benutzers, während zwei mit dem/den Fixierzapfen 22 verbundene Flügel 25 von Zeigefinger und Mittelfinger von "unten" her ergriffen und von der Schiene 5 weg gegen die Kraft der Feder bewegt werden. Dabei wird die Variante nach Figs. 11-13 bevorzugt, da hier die Auflage 24 näher beim Gurthalter 10 liegt als die Mitte zwischen den Fixierbolzen 22. Wenn nur ein Fixierbolzen 22 vorgesehen ist, ist dessen Achse die Referenzstelle, gegenüber der die Auflage zum Schloss hin verschoben sein soll.

Diese Verschiebung, die bei der Version nach Figs. 6-8 nicht vorgesehen ist, erleichtert die Handhabung ungemein, insbesondere beim Hantieren mit angezogenen Handschuhen. Interessant ist, dass die Frage der gegenseitigen Anordnung von Auflage und Flügel bei den Haltevorrichtungen gemäß dem Stand der Technik, bei denen Schloss und Gurthalter in unmittelbarer Nachbarschaft zueinander vorgesehen sind, keine Rolle für den Bedienungskomfort spielt. Die Ursache dafür liegt darin, dass beim Stand der Technik keine merklichen Drehmomente um Achsen parallel zur Wand und normal zur Schiene (etwa entsprechend dem Pfeil M) auftreten können.

Die Erfindung ist nicht auf die beschriebenen und dargestellten Beispiele beschränkt, sondern kann, insbesondere in Abhängigkeit von der Form der Schiene, verschiedentlich abgewandelt werden. Als Material sind alle bei derartigen Befestigungsvorrichtungen bisher gebräuchlichen Materialien einsetzbar, aber auch hochfester Kunststoff und verschiedene Verbundmaterialien bieten sich dem Fachmann in Kenntnis der Erfindung an.

**Bezugszeichenliste:**

| | | | |
|---|---|---|---|
| 01 | LKW-Aufbau | 14 | Haltefüße |
| 02 | Vorderwand | 15 | Ausnehmungen |
| 03 | Seitenwand | 16 | Schlossfüße |
| 04 | Rollcontainer | 17 | Bolzen |
| 05 | Schiene | 18 | Zapfen |
| 06 | Gurt | 19 | Nut |
| 07 | Straffer | 20 | Ränder |
| 08 | Anlenkstelle | 21 | Handhabe |
| 09 | Freie Fläche | 22 | Fixierbolzen |
| 10 | Gurthalter | 23 | Betätigung |
| 11 | Schloss | 24 | Auflage |
| 12 | Stange | 25 | Flügel |
| 13 | Haltevorrichtung | | |

## Patentansprüche

1. Vorrichtung für die Fixierung von Ladegut im Inneren eines LKW-Aufbaus, eines Containers od.dgl. mit einer jeweils an den Seitenwänden (3) horizontal befestigten Schiene (5), die eine Teilung (T) aufweist und an der ein Gurt (6) mittels eines Gurthalters (10) anlegbar und mittels eines mit dem Gurthalter (10) verbundenen Schlosses (11) an Positionen fixierbar ist, die voneinander einen Abstand aufweisen, der der Länge der Teilung (T) entspricht, **dadurch gekennzeichnet, dass** Schloss (11) und Gurthalter (10) Abstand voneinander aufweisen, und dass dieser Abstand zumindest das Dreifache der Länge einer Teilung (T) der Schiene beträgt.

2. Vorrichtung nach Anspruch 1, **dadurch gekennzeichnet, dass** der Abstand zumindest das Fünffache der Länge einer Teilung (T) der Schiene beträgt.

3. Vorrichtung nach Anspruch 2, **dadurch gekennzeichnet, dass** der Abstand zumindest das Siebenfache der Länge einer Teilung (T) der Schiene beträgt.

4. Vorrichtung nach einem der Ansprüche 1 bis 3, **dadurch gekennzeichnet, dass** der Abstand durch eine Stange (12), die mit dem Schloss (11) und dem Gurthalter (10) in die Schiene (5) einsetzbar ist, überbrückt wird.

5. Vorrichtung nach einem der voranstehenden Ansprüche, **dadurch gekennzeichnet, dass** im Bereich des Gurthalters (10) zumindest ein Haltefuß (14) vorgesehen ist, der mit Ausnehmungen (15) der Schiene (5) zusammenwirkt.

6. Vorrichtung nach Anspruch 5, **dadurch gekennzeichnet, dass** im Bereich des Schlosses (11) zumindest ein Schlossfuß (16) vorgesehen ist, der mit Ausnehmungen (15) der Schiene (5) zusammenwirkt, und dass zwischen dem Haltefuß (14) und zumindest einem Schlossfuß (16) in Längsrichtung ein Versatz bezüglich der Teilung der Ausnehmungen (15) besteht.

7. Vorrichtung nach Anspruch 6, **dadurch gekennzeichnet, dass** der Versatz positiv ist.

8. Vorrichtung nach einem der voranstehenden Ansprüche, **dadurch gekennzeichnet, dass** der Gurthalter (10) einen im Wesentlichen quer zur Längsrichtung der Schiene (5) verlaufenden Bolzen (17) aufweist, um den der Gurt (6) geschlungen ist.

9. Vorrichtung nach einem der Ansprüche 1 bis 7, **dadurch gekennzeichnet, dass** der Gurthalter (10) einen im Wesentlichen senkrecht auf die Schiene (5) stehenden Zapfen (18) aufweist, an dem der Gurt (6) seitlich schwenkbar befestigt ist.

10. Vorrichtung nach einem der voranstehenden Ansprüche, **dadurch gekennzeichnet, dass** das Schloss (11) eine Betätigung (23), umfassend eine fest mit der Haltevorrichtung (13) verbundene Auflage (24) und zwei mit dem/den Fixierzapfen (22) verbundene Flügel (25) aufweist, und dass die Auflage (24) dem Gurthalter (10) näher liegt als die die axiale Mitte zwischen den Fixierbolzen (22) bzw. näher liegt als die Achse des einen Fixierbolzens (22).

## Claims

1. Device for fixing cargo inside a truck body, a container or the like, comprising a rail (5) which is horizontally fastened to each of the side walls (3) and has a pitch (T), and on which rail a strap (6) can be positioned by means of a strap holder (10) and can be fixed, by means of a lock (11) connected to the strap holder (10), in positions at a distance from one another that corresponds to the length of the pitch (T), **characterised in that** the lock (11) and strap holder (10) are at a distance from one another, and **in that** this distance is at least three times the length of a pitch (T) of the rail.

2. Device according to claim 1, **characterised in that** the distance is at least five times the length of a pitch (T) of the rail.

3. Device according to claim 2, **characterised in that** the distance is at least seven times the length of a pitch (T) of the rail.

4. Device according to any of claims 1 to 3, **characterised in that** the distance is bridged by a rod (12) which can be inserted into the rail (5) together with the lock (11) and the strap holder (10).

5. Device according to any of the preceding claims, **characterised in that** at least one holding foot (14) is provided in the region of the strap holder (10), which holding foot cooperates with recesses (15) in the rail (5).

6. Device according to claim 5, **characterised in that** at least one lock foot (16) is provided in the region of the lock (11), which lock foot cooperates with recesses (15) in the rail (5), and **in that**, in the longitudinal direction between the holding foot (14) and at least one lock foot (16), there is an offset with respect to the pitch of the recesses (15).

7. Device according to claim 6, **characterised in that** the offset is positive.

8. Device according to any of the preceding claims, **characterised in that** the strap holder (10) has a bolt (17) which extends substantially transversely to the longitudinal direction of the rail (5) and around which the strap (6) is looped.

9. Device according to any of claims 1 to 7, **characterised in that** the strap holder (10) has a pin (18) which is substantially perpendicular to the rail (5) and to which the strap (6) is fastened so as to be laterally pivotable.

10. Device according to any of the preceding claims, **characterised in that** the lock (11) has an actuator (23) comprising a support (24) which is rigidly connected to the holding device (13) and two wings (25) connected to the fixing pin(s) (22), and **in that** the support (24) is closer to the strap holder (10) than the axial centre between the fixing bolts (22) or closer to the belt holder than the axis of the one fixing bolt (22).

## Revendications

1. Dispositif dévolu à l'arrimage d'une cargaison dans l'espace interne de la caisse d'un poids lourd, d'un conteneur ou d'une structure similaire, comportant un rail (5) qui est respectivement fixé aux parois latérales (3) dans le sens horizontal, présente une cote de subdivision (T), et sur lequel une sangle (6) peut être mise en applique au moyen d'un élément de retenue (10) et peut être bloquée à demeure, au moyen d'un verrou (11) relié audit élément (10) de retenue de ladite sangle, en des emplacements espacés les uns des autres d'une distance correspondant à la longueur de ladite cote de subdivision (T), **caractérisé par le fait que** le verrou (11) et l'élément (10) de retenue de la sangle sont mutuellement espacés d'une distance ; et **par le fait que** cette distance mesure au moins le triple de la longueur d'une cote de subdivision (T) du rail.

2. Dispositif selon la revendication 1, **caractérisé par le fait que** la distance mesure au moins le quintuple de la longueur d'une cote de subdivision (T) du rail.

3. Dispositif selon la revendication 2, **caractérisé par le fait que** la distance mesure au moins le septuple de la longueur d'une cote de subdivision (T) du rail.

4. Dispositif selon l'une des revendications 1 à 3, **caractérisé par le fait que** la distance est comblée par une tige (12) pouvant être insérée dans le rail (5) avec le verrou (11) et l'élément (10) de retenue de la sangle.

5. Dispositif selon l'une des revendications précédentes, **caractérisé par le fait qu'**au moins un socle d'arrêt (14), prévu dans la région de l'élément (10) de retenue de la sangle, coopère avec des évidements (15) du rail (5).

6. Dispositif selon la revendication 5, **caractérisé par le fait qu'**au moins un piètement (16), prévu dans la région du verrou (11), coopère avec des évidements (15) du rail (5) ; et par la présence d'un décalage dans la direction longitudinale, entre le socle d'arrêt (14) et au moins un piètement (16) du verrou, par rapport à la répartition des évidements (15).

7. Dispositif selon la revendication 6, **caractérisé par le fait que** le décalage est positif.

8. Dispositif selon l'une des revendications précédentes, **caractérisé par le fait que** l'élément (10) de retenue de la sangle est pourvu d'une broche (17) qui s'étend pour l'essentiel transversalement par rapport à la direction longitudinale du rail (5), et autour de laquelle ladite sangle (6) est enroulée.

9. Dispositif selon l'une des revendications 1 à 7, **caractérisé par le fait que** l'élément (10) de retenue de la sangle est muni d'un tourillon (18) qui se dresse pour l'essentiel perpendiculairement au rail (5), et auquel ladite sangle (6) est fixée avec faculté de pivotement latéral.

10. Dispositif selon l'une des revendications précédentes, **caractérisé par le fait que** le verrou (11) est équipé d'un ensemble d'actionnement (23) composé d'une pièce d'appui (24) reliée rigidement au dispositif d'arrêt (13), et de deux ailes (25) reliées au(x) tenon(s) (22) de blocage à demeure ; et **par le fait que** ladite pièce d'appui (24) est plus rapprochée, de l'élément (10) de retenue de la sangle, que le centre axial entre les tenons (22) de blocage à demeure, ou respectivement plus rapprochée que l'axe de l'un desdits tenons (22) de blocage à demeure.
